# EUROPÄISCHE PATENTANMELDUNG

(11) **EP 0 533 001 A1**
(43) Veröffentlichungstag der Anmeldung: **24.03.1993**
(21) Anmeldenummer: 92115213.8
(22) Anmeldetag: 05.09.1992
(51) Int. Cl.: B27F 5/12, B23C 3/12, B23Q 35/10

(54) **Vorrichtung zum Einfräsen von Ausnehmungen in aus Metall, Kunststoff o. dgl. bestehende Profilstücke**

(30) Priorität: 19.09.1991 DE 4131264
(71) Anmelder: Eisenbach, Bernd, D-65611 Brechen (DE)
(72) Erfinder: Eisenbach, Bernd, D-65611 Brechen (DE)
(74) Vertreter: Müller, Eckhard, Dr.

(57) **Zusammenfassung**

Es handelt sich um eine Vorrichtung zum Einfräsen von Ausnehmungen in aus Metall, Kunststoff o. dgl. bestehende Profilstücke, insbesondere für Tür- oder Fensterrahmen, mit einem gegenüber einem Maschinengestell (1) mittels eines Handbebels (15) verfahrbaren und mittels eines weiteren Handhebels (16) höhenverstellbaren Frässupport (12), der mindestens eine Fräswelle (14) mit waagrechter Drehachse und eine diese antreibende Antriebseinheit (22) trägt, mit einer Aufspannfläche (29) für die zu bearbeitenden Werkstücke sowie mit einer Kopierschablone (24) für die waagrechten Bewegungen der Fräswelle (14) , deren Führungsöffnungen (53, 53') von einem am Frässupport (12) angeordneten Kopierstift (23) abtastbar sind. Dabei ist eine zweite, ortsfest am Maschinengestell (1) gehaltene Kopierschablone (55) für die Bewegungen der mindestens einen waagrechten Fräswelle (14) in einer vertikalen Ebene vorgesehen, deren Führungsöffnungen (56) von einem am Frässupport (12) angeordneten Kopierstift (57) abtastbar sind.

## Beschreibung

Die Erfindung betrifft eine Vorrichtung zum Einfräsen von Ausnehmungen in aus Metall, Kunststoff o. dgl. bestehende Profilstücke, insbesondere für Tür- oder Fensterrahmen, mit einem gegenüber einem Maschinengestell mittels eines Handhebels verfahrbaren und mittels eines weiteren Handhebels höhenverstellbaren Frässupport, der mindestens eine Fräswelle mit waagrechter Drehachse und eine diese antreibende Antriebseinheit trägt, mit einer Aufspannfläche für die zu bearbeitenden Werkstücke sowie mit einer Kopierschablone für die waagrechten Bewegungen der Fräswelle, deren Führungsöffnungen von einem am Frässupport angeordneten Kopierstift abtastbar sind.

Eine Vorrichtung der eingangs genannten Art ist bereits aus der DE 30 08 521 A1 bekannt. Mit dieser Fräsmaschine ist es möglich, die Bearbeitung aller Ausnehmungen in mehreren Wänden eines Profilstückes in einer einzigen Einspannung durchzuführen. Neben einer senkrechten Fräswelle mit daran aufgenommenem Fräser zum Einfräsen von rechteckigen Schloßkastenausnehmungen in die bzgl. der Werkstückaufnahmefläche obere Wandung des Profils kann die Fräsvorrichtung eine der waagrechten Fräswelle entgegengerichtete zweite waagrechte Fräswelle aufweisen, welche in einem vom Frässupport vorkragenen Fräswellenträger gelagert ist. Dabei hat jeder der waagrechten Fräser nur einen Teil der senkrechten Profilwände zu fräsen, nämlich die ihm zugewandten Profilwände, während die Profilwände in der gegenüberliegenden Profilhälfte von dem jeweils anderen waagrechten Fräser gefräst werden. Zum Fräsen einer Profilzylinderausnehmung in die senkrechten Wände des Profilstuckes weist der Kopf des Fräsers einen größeren Durchmesser als der Fräserschaft auf, wobei der Kopierstift in einer verzweigten Führungsöffnung geführt ist. Durch Eintauchen des Fräserkopfes in die entsprechende Profilwandung wird die kreisförmige Ausnehmung der Profilzylinderausnehmung eingefräst und danach mit dem im Durchmesser kleineren Fräserschaft der sich an die kreisförmige Ausnehmung anschließende und in seiner Ausdehnung schmälere Abschnitt der Profilzylinderausnehmung herausgearbeitet. Mit einem solchen Fräser können auch Drückerlöcher in die senkrechten Wände des Profils eingefräst werden, wobei der Kopierstift dann in einem länglichen Schlitz der Kopierschablone geführt ist. Zur Längs- und Querverstellung des durch die Kopiereinrichtung geführten Frässupportes dient ein Handhebel, der in einem Kreuzgelenk im Frässupport geführt und in einem Kreuzgelenk am Maschinengestell gelagert ist.

Nachteilig bei der bekannten Fräsvorrichtung ist, daß der oder die waagrechten Fräswellen nicht vertikal verschiebbar sind, um bspw. Einfräsungen von Briefkastenschlitzen oder etwa Sonderformen von Schloßkastenausnehmungen in breiten Profilen an den senkrechten Wänden des Profilstückes einzufräsen.

Davon ausgehend liegt der Erfindung die Aufgabe zugrunde, eine Vorrichtung der eingangs genannten Art dahingehend weiterzuentwickeln, daß bei einfacher Handhabung und relativ kurzen Bearbeitungszeiten eine vertikale Bewegung der waagrechten Fräswelle zum Einfräsen von Sonderformen für Schloßausnehmungen u. dgl. in den in eingespannter Stellung senkrechten Wänden der Profile ermöglicht ist.

Zur Lösung der Aufgabe ist es nach der Erfindung i. w. vorgesehen, daß eine zweite, ortsfest am Maschinengestell gehaltene Kopierschablone für eine Bewegung der mindestens einen waagrechten Fräswelle in einer i. w. vertikalen Ebene vorgesehen ist, deren Führungsöffnungen von einem am Frässupport angeordneten Kopierstift abtastbar sind.

Mit der erfindungsgemäßen Vorrichtung ist es möglich, nicht nur Drückerlöcher oder Profilzylinderausnehmungen in den bzgl. der Aufspannebene senkrechten Wänden des jeweiligen Profiles einzuarbeiten, sondern bspw. auch Sonderformen von Schloßausnehmungen, indem der oder die waagrechten Fräser über die zweite Kopierschablone in einer vertikalen Ebene bewegbar sind. Die Handhabung erweist sich als besonders einfach, da zur Steuerung der Bewegung der Fräswellen bzw. der daran aufgenommenen Fräser nur zwei Handhebel erforderlich sind. Mit dem einen Hebel erfolgt die Höhenverstellung des Frässupportes, während der zweite Hebel für die Bewegung in einer Ebene senkrecht dazu sorgt. Das Abtasten der Führungsöffnungen in der vertikalen und/oder waagrechter Kopierschablone und damit das Einfräsen von sich in vertikaler Richtung erstreckenden Ausnehmungen in den vertikalen Seitenwänden des Profiles läßt sich damit bequem von einer Bedienungsperson durch gleichzeitige Betätigung der beiden Handhebel ausführen. Die erfindungsgemäße Vorrichtung erweist sich auch in konstruktiver Hinsicht als besonders vorteilhaft, da die unmehr ausgeführte dreidimensionale Bewegung des die mindestens eine Frässpindel aufnehmenden Frässupports, erzeugt durch eine Bewegung in einer waagrechten und einer vertikalen Ebene, unter Beibehaltung der Zwei-Handhebel-Mechanik mit nur drei senkrecht zueinander stehenden Führungen für den Frässupport erreicht wird. Selbstverständlich ist es mit der erfindungsgemäßen Vorrichtung auch möglich, lediglich Drückerlöcher oder Profilzylinderausnehmungen in die vertikalen Wandungen des Profiles einzuarbeiten, bei denen eine vertikale Bewegung der waagrechten Frässpindel nicht erforderlich ist. Dies kann dadurch erfolgen, daß entsprechende Führungsöffnungen entweder in der ersten Kopierschablone oder in der zweiten, vertikal angeordneten Kopierschablone vorgesehen sind, wobei im letzten Falle anstelle eines Profilfräsers bspw. auch ein Fingerfräser eingesetzt werden kann. Dabei lassen sich die Ausnehmungen in den Profilwänden in einer einzigen Einspannung des Profiles durchführen. Ein weiterer Vorteil der erfindungsgemäßen Vorrichtung ist, daß in konstruktiv einfacher Weise am Frässuport weitere Bearbeitungseinheiten angeordnet werden können, wie bspw. eine der waagrechten Fräswelle entgegengerichtete zweite waagrechte Fräswelle und/oder eine vertikale Fräswelle.

In einer ersten besonderen Ausführungsform der Erfindung ist es vorgesehen, daß der Kopierstift auf der der mindestens einen waagrechten Fräswelle gegenüberliegenden Seite des Frässupports angeordnet ist und in die vertikal am Maschinengestell gehaltene zweite Kopierschablone eingreift. Dadurch, daß die zweite Kopierschablone mit zugeordnetem Kopierstift auf der dem Arbeitsbereich der Maschine gegenüberliegenden Seite des Frässupportes angeordnet ist, lassen sich in konstruktiv vorteilhafter Weise weitere Bearbeitungseinheiten am Frässupport oder der Aufspannfläche für die Werkstücke anordnen, wie bspw. eine der waagrechten Fräswelle entgegengerichtete zweite Fräswelle, welche in einem vom Frässupport vorkragenden Fräswellenträger gelagert ist und zur Bearbeitung der zugewandten vertikalen Wandung des Profiles dient. Auch bei einer solchen Ausführungsform ist gewährleistet, daß die Bearbeitung aller Ausnehmungen in den Wandungen des Profilstückes in nur einer einzigen Einspannung möglich ist.

Insbesondere bei einer Vorrichtung, bei welcher eine der waagrechten Fräswelle entgegengerichtete zweite Fräswelle an dem Frässupport vorgesehen ist, empfiehlt es sich nach der Erfindung, daß der Frässupport in seiner Bewegungsrichtung in Längsrichtung der waagrechten Fräswelle, bspw. mittels Anschlägen oder Rasten, einstellbar ist. Hierdurch ist ein rasches Bearbeiten des Profilstückes mit dem Fräser des oder der beiden waagrechten Fräswellen ermöglicht. Zudem ist eine Fehlbetätigung und damit ein Ausschuß vermieden ist, bspw. im Falle, daß beim Rückführen des einen waagrechten Fräsers von seiner Arbeitsstellung zurück in die Ausgangsstellung der jeweils andere Fräser nicht ungewollt in Eingriff mit dem Profil gelangen kann.

In gleicher Weise ist es bei einer Vorrichtung, bei welcher zusätzlich eine senkrechte Fräswelle am Frässupport gehalten ist, nach der Erfindung vorgesehen, daß der Frässupport in seiner Bewegungsrichtung in Längsrichtung der vertikalen Fräswelle, vorzugsweise mittels Anschlägen oder Rasten, einstellbar ist. Auch hierbei wird vermieden, daß bspw. bei einer vertikalen Bewegung des Frässupportes, um den oder die waagrechten Fräser in Arbeitsstellung oder zurück in Ausgangsstellung zu fahren, der an der senkrechten Fräswelle aufgenommene Fräser, unbeabsichtigt in Eingriff mit dem Profil gelangt.

Im Rahmen der Erfindung liegt es auch, daß wenigstens zwei seitlich nebeneinander angeordnete waagrechte Fräswellen vorgesehen sind, welche unabhängig voneinander von einer zurückgezogenen Stellung in eine Arbeitsstellung an dem Werkstück ausfahrbar sind, wobei einer dieser wenigstens zwei seitlich nebeneinander angeordneten waagrechten Fräswellen für die durch die vertikale Schablone festgelegten Bewegungen in der vertikalen Ebene vorgesehen ist. Hierdurch bedarf es keiner Umrüstung der Maschine, um bspw. bei einem aufgelegtem Profiltyp nur Drückerlöcher und/oder Profilzylinderausnehmungen in die vertikalen Wände des Profilstückes einzufräsen und bei einer zweiten Profilart bspw. Sonderformen von Schloßkastenausnehmungen einzufräsen, wobei dann die Kopiereinheit mit vertikal angeordneter Kopierschablone und zugeordnetem Kopierstift die Bewegungen der entsprechenden, bspw. einen Fingerfräser aufnehmenden, waagrechten Fräswelle steuert. Dabei können die Fräswellen auch bspw. paarweise einander entgegengerichtet am Frässupport aufgenommen sein.

Zur Vereinfachung der Handhabung und Vermeidung von Ausschuß bei Einsatz eines für das eingelegte Profil falschen Fräswerkzeuges ist es erfindungsgemäß vorgesehen, daß bei Eingreifen des Kopierstiftes in die Führungsöffnungen der vertikalen Kopierschablone die zugeordnete waagrechte Fräswelle in ihre Arbeitsstellung an das Werkstück ausfahrbar und die seitlich daneben angeordnete zweite waagrechte Fräswelle in ihre Ausgangsstellung zurückfahrbar ist. Die Verstellung der Fräswellen in Arbeits- und Ausgangsstellung sollte dabei vorzugsweise selbstätig erfolgen.

Selbstverständlich ist es nach der Erfindung auch möglich, daß die wenigstens zwei nebeneinander angeordneten Fräswellen und/oder ggf. die entgegengerichtete Fräswelle eine gemeinsame Antriebseinheit aufweisen.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:

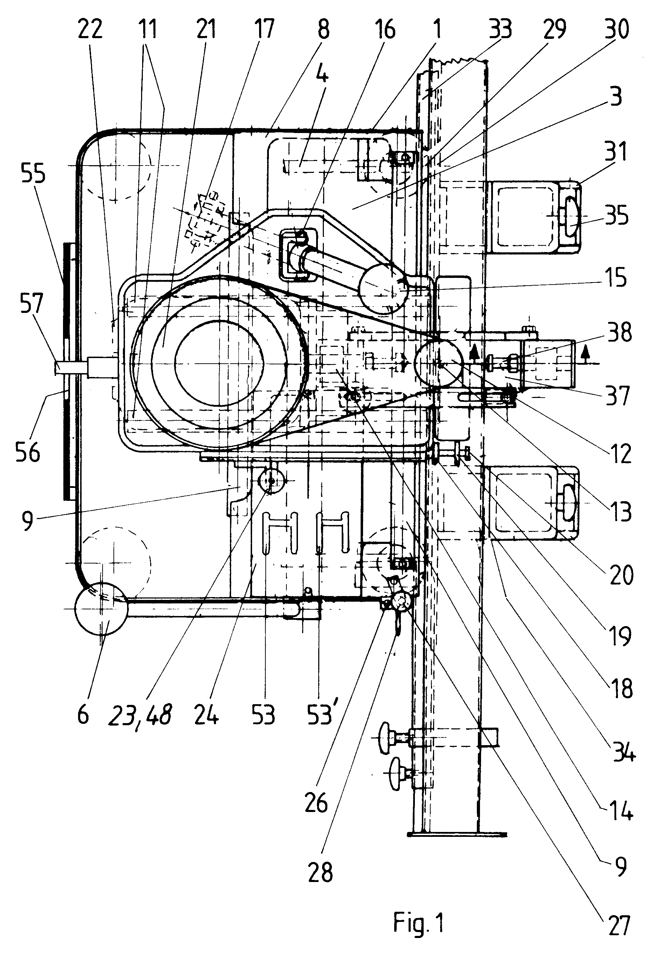

- Figur 1: eine Fräsvorrichtung für Profilstücke von Tür- oder Fensterrahmen in einer Draufsicht,
- Figur 2: eine Teilansicht der Fräsvorrichtung gemäß Figur 1 in Richtung des Pfeiles II mit einem im Schnitt dargestellten, eingespannten Profilstück bei der Bearbeitung durch einen senkrechten Fräser,
- Figur 3: eine Teilansicht ähnlich Figur 2 bei der Bearbeitung durch einen der beiden waagrechten Fräser,
- Figur 4: eine Teilansicht der Fräsvorrichtung gemäß Figuren 2 und 3 sowie einen Teilschnitt längs der Linie IV-IV gemäß Figur 1 bei Arbeitseingriff des entgegengerichteten waagrechten Fräsers und
- Figur 5: eine Teilansicht ähnlich Figur 3 beim Arbeitseingriff des einen waagrechten Fräsers zum Fräsen einer Schloßausnehmung in eine in Aufspannstellung senkrechte Wand des Profilstückes.

In einem Maschinengestell 1 sind zwei senkrechte Säulen 2 in senkrechter Richtung verstellbar angeordnet. Zur parallelen Höhen- und Tiefenverstellung der beiden Säulen 2 ist eine Welle 3 im Maschinengestell 1 drehbar gelagert, welche wiederum zwei mit den Säulen 2 im Eingriff stehende Hebel 4 dreht. Die Höhenverstellung erfolgt mittels eines seitlich am Maschinengestell angeordneten Handhebels 6, der mit der Welle 3 verbunden ist. Selbstverständlich ist es auch möglich, daß die Höhenverstellung mittels eines Kniehebels erfolgt, dessen Lastarm sich über eine Gasdruckfeder am Maschinengestell abstützt.

An den Säulen 2 ist ein Führungsrahmen 8 mit Rundführungen 9 angebracht. Auf den Rundführungen 9 ist längsverschieblich ein Kreuzsupport 10 angeordnet, der rechtwinklig zu den Rundführungen 9 wiederum zwei Rundführungen 11 aufweist. An den beiden Enden der Rundführungen 11 ist ein Frässupport 12 befestigt, der eine senkrechte Fräswelle 13 und eine waagrechte Fräswelle 14 trägt. Zur Längs- und Querverstellung des Frässupports 12 dient ein zweiter Handhebel 15, der in einem Kreuzgelenk 16 im Frässupport 12 geführt ist und in einem zweiten Kreuzgelenk 17 am Maschinengestell 1 gelagert ist.

Am Frässupport 12 sind zwei Fräsmotore 21, 22 angebracht. Der Fräsmotor 21 treibt über einen Riementrieb o. dgl. die senkrechte Fräswelle 13 an. Der waagrechte Fräsmotor 22, welcher bei der hier gezeigten Ausführungsform mit einem eine Drehzahlverstellung ermöglichenden Getriebe versehen ist, dient zum Antrieb der einen waagrechten Fräswelle 14 und einer dieser entgegengerichteten zweiten waagrechten Fräswelle 38. Hierfür ist an der Unterseite des Frässupportes 12 an dem damit verbundenen Fräsmotor 22 ein vorkragender Fräswellenträger 37 angeflanscht, der bei dem dargestellten Ausführungsbeispiel unterhalb der Werkstück-Aufspannfläche 29 zwischen zwei Konsolen 31 vorspringt und in seinem nach oben ragenden Endteil die Lagerung für die zweite waagrechte Fräswelle 38 aufweist, die der unmittelbar mit dem Fräsmotor 22 verbunden Fräswelle 14 entgegengerichtet ist und mit dieser fluchtet.

Im unteren Teil des Fräswellenträgers 37 ist eine Zwischenwelle 39 gelagert, die an einem Ende mit der Antriebswelle des Fräsmotors 22 und am anderen Ende mit der entgegengerichteten Fräswelle 38 in Antriebsverbindung steht, und zwar bei dem dargestellten Ausführungsbeispiel über einen Zahnriementrieb 40 bzw. 41. Anstelle dieser Zahnriementriebe können auch Zahnradgetriebe, Kettengetriebe, Keilriementriebe o. dgl. verwendet werden.

Die Einrichtung des Frässupports in Längsrichtung der Fräswellen 14, 38 erfolgt über Handräder 18 und 19 an Meßskalen, wodurch mit dem Frässupport 12 zusammenwirkende Anschläge 58, 59 eingestellt werden. Auf diese Weise können zum einen beliebig breite Abfräsungen unabhängig vom Fräsdurchmesser hergestellt werden. Zum anderen ist hierdurch der Frässupport 12 in seiner Bewegungsrichtung längs der Fräswelle 14 bzw. 38 einstellbar, um eine Fehlbedienung der Maschine auszuschließen. So ist vermieden, daß bei einem Zurückfahren der bspw. in den Figuren gezeigten linken waagrechten Fräswelle 14 von ihrer Eingriffsstellung an dem Profilstück 43 in ihre Ausgangsstellung die zweite waagrechte Fräswelle 38 mit ihrem Fräser 54 in Eingriff mit dem zugeordneten Profilteil 44 des Profilstückes 42 gelangt. In Längsrichtung des Profils 42 können ebenfalls verstellbare Anschläge (nicht gezeigt) an Meßskalen vorgesehen werden, um beliebig lange Ausfräsungen zu ermöglichen. Am Frässupport 12 ist ein mittels eines Handrades 20 querverstellbarer Kopierstift 23 angebracht, der in eine auf dem Führungsrahmen 8 leicht auswechselbar angebrachte Kopierschablone 24 hineinragt. Der Kopierstift 23 wird durch Hochziehen eines Kugelgriffes 25 oder einen Hebel o. dgl. aus der Kopierschablone 24 herausgezogen und durch Herunterdrücken des Kugelgriffes 25 oder eines Hebels oder durch Drehen eines Hebels in eine neue Führungsöffnung 48, 51, 51', 53 oder 53' der Kopierschablone 24 eingeführt. Selbstverständlich ist auch eine pneumatische Betätigung des Kopierstiftes 23 möglich.

An dem der Bearbeitungseinheiten gegenüberliegenden Seite des Frässupportes 12 ist ein pneumatisch verstellbarer Kopierstift 57 angebracht, der in eine an dem Führungsrahmen 8 leicht auswechselbar angebrachte zweite Kopierschablone 55 hineinragt. Diese zweite Kopiereinheit dient zur Bewegungssteuerung der waagrechten Fräswellen 14 und/oder 38 in einer vertikalen Ebene. Der Kopierstift 57 wird pneumatisch aus der Kopierschablone 55 herausgezogen und entsprechend in die Führungsöffnungen 56 der Kopierschablone 55 eingeführt.

Zur Höhenverstellung bei den einzelnen Fräsgängen sind seitlich am Maschinengestell 1 mehrere in Höhe einstellbare Anschläge 26 und 27 vorgesehen. Dabei trägt der Führungsrahmen 8 seitlich eine schwenkbare und mit Rasten versehene Gewindespindel mit Handrad 28, die für die verschiedenen Anschläge eingeschwenkt und eingerastet werden kann. Diese Anschläge 26 und 27 dienen gleichzeitig dazu, bei einer Steuerung der Bewegung der waagrechten Frässpindel 14 und/oder 38 mittels der vertikalen Kopiereinheit zu verhindern, daß die senkrechte Frässpindel 13 bzw. der daran aufgenommene Fräser 46 ungewollt mit dem Profilteil 46 in Eingriff gelangt.

An seiner Forderfläche weist das Maschinengestell 1 eine senkrechte Aufspannfläche 29 auf, so daß Werkstücke in beliebiger Größe oder bereits zu einem Rahmen zusammengesetzte Profilstücke in jeder Lage an der Maschine eingespannt werden können. Um Profile in Stäben oder zusammengesetzt zu Rahmen vorteilhaft spannen zu können, ist eine Schiene 30 höhenverstellbar am Maschinengestell 1 angebracht, die die zwei Konsolen 31 mit Spannbacken 34, mit Preßluftzylindern 32 oder sonstigen Handspannvorrichtungen 35 sowie teleskopartig ausziehbare, ggf. mit Längenanschlägen und Auflagekonsolen für Profile oder Rahmen versehene Rechteckrohre 33 o. dgl. besitzt.

Beide Fräsmotore 21 und 22 können mit mehren Drehzahlen für die verschiedenen Werkstoffe betrieben werden. Die Maschine besitzt einen mit einem Handgriff betätigbaren Schalter, mit dem wahlweise die gesamte Maschine stromlos geschaltet wird, die Fräsmotoren 21 und 22 unabhängig voneinander langsam oder schnell und die dazugehörige Sprüheinrichtung und Werkstückspannung geschaltet werden kann.

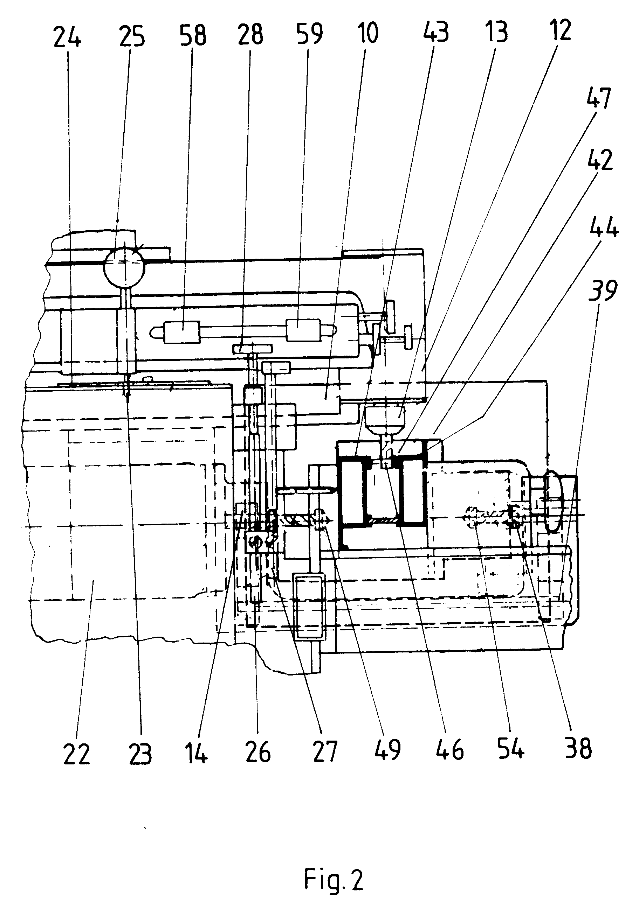

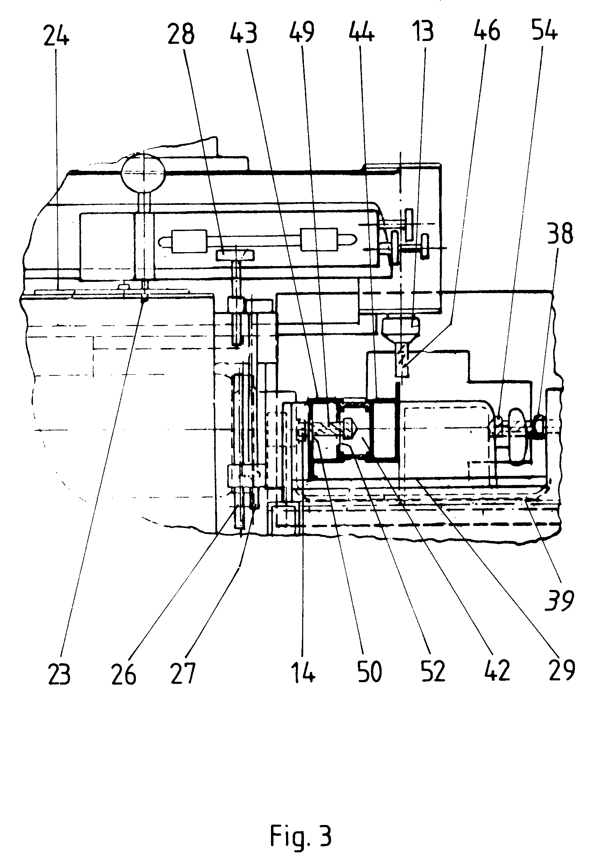

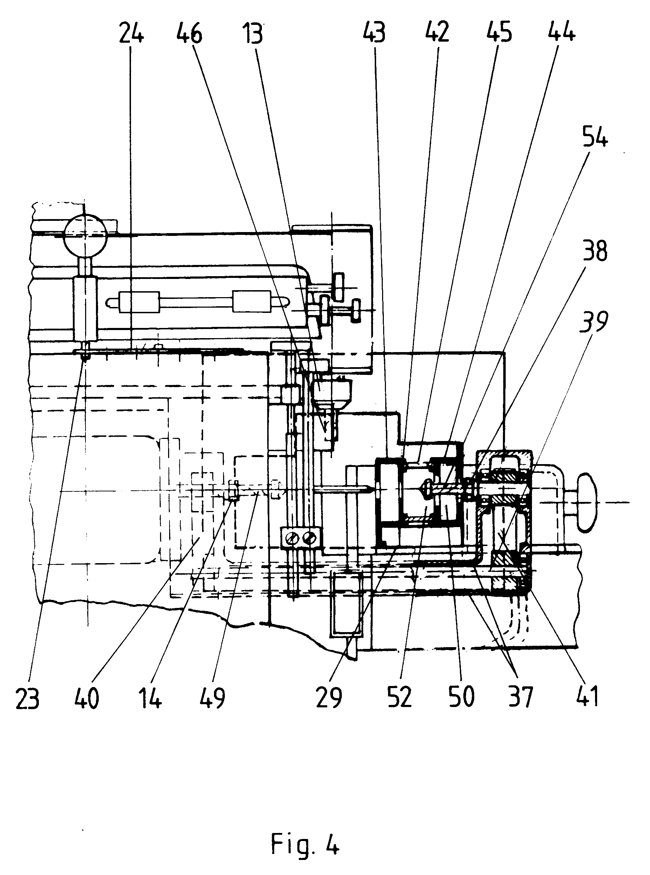

Die Arbeitsweise der Maschine wird am Beispiel der Bearbeitung eines Werkstückes 42 in den Figuren 2 bis 5 erläutert. Das hier gewählte Profilstück besteht aus zwei Hohlkammerprofilen 43 und 44 aus Metall sowie zwei diese verbindenden Kunststoffstreifen 45 als wärmeisolierendes Zwischenstück.

Mit einem in der senkrechten Fräswelle 13 aufgenommenen Fräser 46 wird zunächst, wie dies in Figur 2 angedeutet, eine rechteckige Schloßkastenausnehmung 47 gefräst, wobei der Kopierstift 23 in eine rechteckige Führungsöffnung 48 an der einen Kopierschablone 24 eingreift.

Mit einem in der waagrechten Fräswelle 14 aufgenommenen Fräser 49, dessen Kopf einen größeren Durchmesser als der Fräserschaft hat, läßt sich bspw. ein Drückerloch 50 durch die beiden Wände des Profilstückes 43 fräsen, wobei der Kopierstift 23 in einem länglichen Schlitz 48 der Kopierschablone 24 geführt wird. Zum Fräsen einer Profilzylinderausnehmung 50 in den beiden Wänden des Profilstückes 43 wird der Kopierstift 23 in einer verzeigten Führungsöffnung 53' der Kopierschablone 24 geführt. Zum Fräsen einer Profilzylinderausnehmung 52 in die beiden Wände des gegenüberliegenden Profilstückes 44 wird ein dem Fräser 49 entsprechender Fräser 54 benutzt, welcher in der Fräswelle 38 aufgenommen ist. Dabei tastet der Kopierstift 23 die entsprechenden, ebenfalls verzweigten Führungsöffnungen 53 in der Kopierschablone 24 ab.

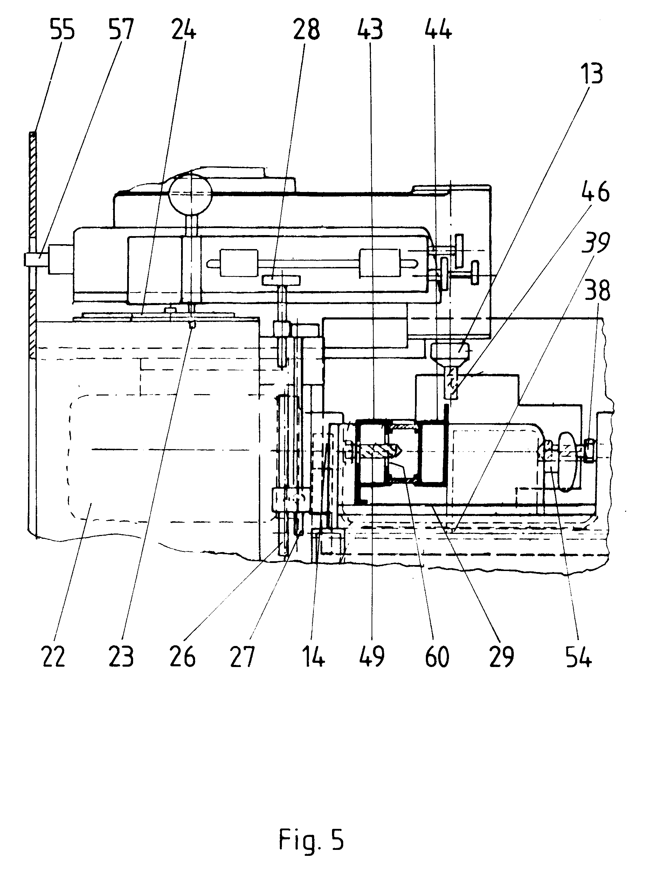

Sollen nun in den senkrechten Wänden der Profilstücke 43, 44 anstelle von Profilzylinderausnehmungen oder Drückerlöchern Briefkastenschlitze oder Sonderformen von Schloßkastenausnehmungen 60 eingefräst werden, wird der Kopierstift 23 durch Hochziehen des Kugelgriffes 25 außer Eingriff mit der Kopierschablone 24 gebracht und der am Frässupport 12 angeordnete Kopierstift 57 pneumatisch in die Führungsöffnungen 56 der vertikalen Kopierschablone 55 eingeführt. Im Falle, daß der in Figur 5 linke Fräser 49 zur Bearbeitung kommt, werden die Anschläge 58, 59 in Wirkstellung gebracht, um zu verhindern, daß bei einem unbeabsichtigten Zurückziehen der Fräswelle 14 während der Bearbeitung oder nach Beendigung des Arbeitsvorganges der an der entgegengerichteten zweiten Fräswelle 38 aufgenommene Fräser 54 in Eingriff mit dem Werkstückteil 44 gelangt. Sodann wird durch Betätigung der beiden Handhebel 15 und 6 mittels des am Frässupport 12 angeordneten Kopierstiftes 57 die Führungsöffnung 56 an der Kopierschablone 55 abgetastet, wodurch der Fräser 49 sich sowohl in waagrechter als auch in vertikaler Richtung bewegt und die Ausnehmung in der Schablone 55 in die Wandungen des Profilstückes 43 überträgt. Zwar bewegt sich der Fräser 54 analog zu dem in Arbeitsstellung befindlichen Fräser 49, ohne aber dabei in Eingriffsstellung an das zugewandte Profilstück 44 zu treten. Selbstverständlich ist es auch möglich, mit dem in den Figuren 2 bis 5 dargestellten rechten Fräser 54 eine Schloßkastenausnehmung o. dgl. in die vertikalen Wandungen des Profilstückes 44 einzufräsen, wobei dann die Anschläge 58, 59 entsprechend zu verstellen sind.

## Patentansprüche

1. Vorrichtung zum Einfräsen von Ausnehmungen in aus Metall, Kunststoff o. dgl. bestehende Profilstücke, insbesondere für Tür- oder Fensterrahmen, mit einem gegenüber einem Maschinengestell (1) mittels eines Handhebels (15) verfahrbaren und mittels eines weiteren Handhebels (6) höhenverstellbaren Frässupport (12), der mindestens eine Fräswelle (14) mit waagrechter Drehachse und eine diese antreibende Antriebseinheit (22) trägt, mit einer Aufspannfläche (29) für die zu bearbeitenden Werkstücke (42) sowie mit einer Kopierschablone (24) für die waagrechten Bewegungen der Fräswelle (14), deren Führungsöffnungen (50, 53; 50', 53) von einem am Frässupport (12) angeordneten Kopierstift (23) abtastbar sind, dadurch gekennzeichnet, daß eine zweite, ortsfest am Maschinengestell (1) gehaltene Kopierschablone (55) für die Bewegungen der mindestens einen waagrechten Fräswelle (14) in einer i. w. vertikalen Ebene vorgesehen ist, deren Führungsöffnungen (56) von einem am Frässupport (12) angeordneten Kopierstift (57) abtastbar sind.

2. Vorrichtung nach Anspruch 1, dadurch gekennzeichnet, daß der Kopierstift (57) auf der der mindestens einen waagrechten Fräswelle (14) gegenüberliegenden Seite des Frässupports (12) angeordnet ist und in die vertikal am Maschinengestell (1) gehaltene zweite Kopierschablone (55) eingreift.

3. Vorrichtung nach einem der Ansprüche 1 oder 2, wobei ggf. eine der waagrechten Fräswelle (14) entgegengerichtete zweite Fräswelle (38) an dem Frässupport (12) vorgesehen ist, dadurch gekennzeichnet, daß der Frässpupport (12) in seiner Bewegungsrichtung in Längsrichtung der waagrechten Fräswelle (14), bspw. mittels Anschlägen (58, 59) oder Rasten, einstellbar ist.

4. Vorrichtung nach einem der Ansprüche 1 bis 4, wobei ggf. eine senkrechte Fräswelle (13) am Frässupport (12) gehalten ist, dadurch gekennzeichnet, daß der Frässupport (12) in seiner Bewegungsrichtung in Längsrichtung der vertikalen Fräswelle (13), vorzugsweise mittels Anschlägen (26, 27) oder Rasten, einstellbar ist.

5. Vorrichtung nach einem der Ansprüche 1 bis 4, dadurch gekennzeichnet, daß wenigstens zwei seitlich nebeneinander angeordnete waagrechte Fräswellen vorgesehen sind, welche unabhängig voneinander von einer zurückgezogenen Stellung in eine Arbeitsstellung an dem Werksstück (42) ausfahrbar sind, wobei eine dieser wenigstens zwei seitlich nebeneinander angeordneten waagrechten Fräswellen für die durch die vertikale Schablone (55) festgelegten Bewegungen in der vertikalen Ebene vorgesehen ist.

6. Vorrichtung nach einem der Ansprüche 1 bis 5, dadurch gekennzeichnet, daß bei Eingreifen des Kopierstiftes (57) in die Führungsöffnungen (56) der vertikalen Kopierschablone (55) die zugeordnete waagrechte Fräswelle in ihre Arbeitsstellung an das Werkstück ausfahrbar und die seitlich daneben angeordnete zweite waagrechte Fräswelle, in ihre Ausgangsstellung zurückfahrbar ist.

7. Vorrichtung nach einem der Ansprüche 1 bis 6, dadurch gekennzeichnet, daß die wenigstens zwei nebeneinander angeordneten Fräswellen und ggf. die entgegengerichtete Fräswelle (38) eine gemeinsame Antriebseinheit aufweisen.
